(19) Europäisches Patentamt
European Patent Office
Office européen des brevets

(11) Veröffentlichungsnummer: **0 519 270 B1**

(12) **EUROPÄISCHE PATENTSCHRIFT**

(45) Veröffentlichungstag der Patentschrift: **06.12.95**

(51) Int. Cl.[6]: **C09B 43/00**, C09B 29/085, C09B 43/28, C10L 1/00, C09B 31/043

(21) Anmeldenummer: **92109350.6**

(22) Anmeldetag: **03.06.92**

# (54) Verfahren zur Herstellung von acetalisierten Azofarbstoffen.

(30) Priorität: **20.06.91 DE 4120363**

(43) Veröffentlichungstag der Anmeldung:
**23.12.92 Patentblatt 92/52**

(45) Bekanntmachung des Hinweises auf die Patenterteilung:
**06.12.95 Patentblatt 95/49**

(84) Benannte Vertragsstaaten:
**BE CH DE ES FR GB IT LI NL**

(56) Entgegenhaltungen:
**US-A- 4 011 209**

(73) Patentinhaber: **BASF Aktiengesellschaft**
**Carl-Bosch-Strasse 38**
**D-67063 Ludwigshafen (DE)**

(72) Erfinder: **Hansen, Guenter, Dr.**
**Alwin-Mittasch-Platz 8**
**W-6700 Ludwigshafen (DE)**
Erfinder: **Zeidler, Georg**
**Mutterstadter Strasse 7**
**W-6701 Dannstadt-Schauernheim (DE)**

EP 0 519 270 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

## Beschreibung

Die vorliegende Erfindung betrifft ein neues Verfahren zur Herstellung von acetalisierten Azofarbstoffen durch Diazotieren eines Amins und Kuppeln mit einer eine Hydroxyalkylgruppe aufweisenden Kupplungskomponente und anschließender Umsetzung mit einem Vinylether.

Aus der DE-A-2 129 590 sind acetalisierte Azofarbstoffe bekannt. Die dort beschriebene Herstellweise ist allerdings umständlich, da die Farbstoffe vor dem Acetalisierungsschritt zwischenisoliert werden müssen. Außerdem läuft die Acetalisierungsreaktion in unbefriedigender Weise ab, da hierbei häufig Sedimente gebildet werden, die bei der Anwendung des acetalisierten Farbstoffs in Mineralölen hinderlich sind.

Aufgabe der vorliegenden Erfindung war es daher, ein neues Verfahren zur Herstellung von acetalisierten Azofarbstoffen bereitzustellen, bei dem auf eine Zwischenisolierung des nicht-acetalisierten Azofarbstoffs verzichtet werden kann und mittels dessen die Zielprodukte in anwendungstechnisch einwandfreier Form anfallen.

Es wurde nun gefunden, daß die Herstellung von Farbstoffen der Formel I

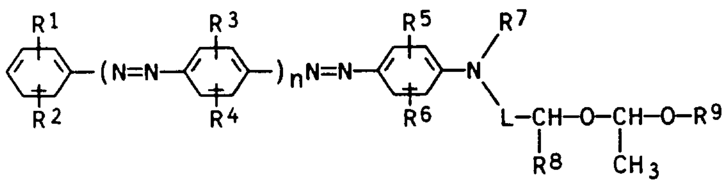

(I),

in der

| | |
|---|---|
| n | null oder 1, |
| $R^1$, $R^2$, $R^3$ und $R^5$ | gleich oder verschieden sind und unabhängig voneinander jeweils Wasserstoff, $C_1$-$C_4$-Alkyl, $C_1$-$C_4$-Alkoxy, Halogen oder Nitro, |
| $R^4$ und $R^6$ | gleich oder verschieden sind und unabhängig voneinander jeweils Wasserstoff, $C_1$-$C_4$-Alkyl, $C_1$-$C_4$-Alkoxy, Halogen, Nitro oder $C_1$-$C_4$-Alkanoylamino, |
| $R^7$ | $C_1$-$C_4$-Alkyl, |
| $R^8$ | Wasserstoff oder $C_1$-$C_4$-Alkyl |
| $R^9$ | $C_1$-$C_{18}$-Alkyl oder Cyclohexyl und |

L $C_1$-$C_3$-Alkylen bedeuten, durch Kupplungsreaktion des Diazoniumsalzes des Amins der Formel II

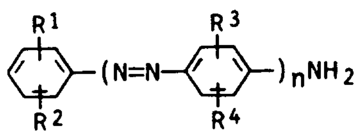

(II),

in der n, $R^1$, $R^2$, $R^3$ und $R^4$ jeweils die obengenannte Bedeutung besitzen, mit der Kupplungskomponente der Formel III

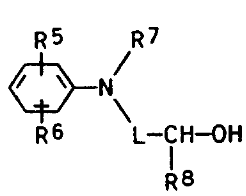

(III),

in der $R^5$, $R^6$, $R^7$, $R^8$ und L jeweils die obengenannte Bedeutung besitzen, und anschließender Umsetzung des resultierenden Farbstoffs der Formel IV

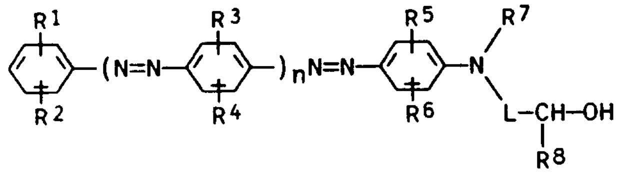

(IV),

in der n, $R^1$, $R^2$, $R^3$, $R^4$, $R^5$, $R^6$, $R^7$, $R^8$ und L jeweils die obengenannte Bedeutung besitzen, mit einem Vinylether der Formel V

$CH_2 = CH\text{-}OR^9$ (V),

in der $R^9$ die obengenannte Bedeutung besitzt, vorteilhaft gelingt, wenn man die Kupplungsreaktion in einem zweiphasigen Reaktionsgemisch, enthaltend Wasser und einen aromatischen Kohlenwasserstoff, durchführt, anschließend die wäßrige Phase abtrennt und den in der organischen Phase befindlichen Farbstoff der Formel IV ohne Zwischenisolierung mit einem Vinylether der Formel V in Gegenwart einer mehrbasigen Carbonsäure als Katalysator umsetzt.

Alle in den obengenannten Formeln auftretenden Alkyl- oder Alkylengruppen können sowohl geradkettig als auch verzweigt sein.

Reste $R^1$, $R^2$, $R^3$, $R^4$, $R^5$, $R^6$, $R^7$, $R^8$ und $R^9$ sind z.B. Methyl, Ethyl, Propyl, Isopropyl, Butyl, Isobutyl oder sec-Butyl.

Reste $R^1$, $R^2$, $R^3$, $R^4$, $R^5$ und $R^6$ sind weiterhin z.B. Methoxy, Ethoxy, Propoxy, Isopropoxy, Butoxy, Isobutoxy, sec-Butoxy, Fluor, Chlor oder Brom.

Reste $R^4$ und $R^6$ sind weiterhin z.B. Formylamino, Acetylamino, Propionylamino oder Butyrylamino.

Reste $R^9$ sind weiterhin z.B. Pentyl, Isopentyl, Neopentyl, tert-Pentyl, Hexyl, 2-Methylpentyl, Heptyl, 1-Ethylpentyl, Octyl, 2-Ethylhexyl, Isooctyl, Nonyl, Isononyl, Decyl, Isodecyl, Undecyl, Dodecyl, Tridecyl, Isotridecyl, Tetradecyl, Pentadecyl, Hexadecyl, Heptadecyl oder Octadecyl (die obigen Bezeichnungen Isooctyl, Isononyl, Isodecyl und Isotridecyl sind Trivialbezeichnungen und stammen von den nach der Oxosynthese erhaltenen Alkoholen - vgl. dazu Ullmanns Encyklopädie der technischen Chemie, 4. Auflage, Band 7, Seiten 215 bis 217, sowie Band 11, Seiten 435 und 436).

Reste L sind z.B. Methylen, Ethylen, 1,2- oder 1,3-Propylen, Ethyliden oder Propyliden.

Hervorzuheben ist eine Verfahrensweise zur Herstellung von Farbstoffen der Formel I, in der $R^1$, $R^2$, $R^3$, $R^4$, $R^5$ und $R^6$ unabhängig voneinander jeweils Wasserstoff, Methyl, Methoxy oder Nitro bedeuten.

Bevorzugt ist eine Verfahrensweise zur Herstellung von Farbstoffen der Formel I, in der n null bedeutet.

Weiterhin bevorzugt ist eine Verfahrensweise zur Herstellung von Farbstoffen der Formel I, in der $R^1$, $R^2$, $R^3$, $R^4$, $R^5$ und $R^6$ jeweils Wasserstoff bedeuten.

Weiterhin bevorzugt ist eine Verfahrensweise zur Herstellung von Farbstoffen der Formel I, in der $R^8$ Wasserstoff, $R^9$ $C_1$-$C_8$-Alkyl und L $C_1$- oder $C_2$-Alkylen bedeuten.

Von ganz besonderem technischem Interesse ist eine Verfahrensweise zur Herstellung des Farbstoffs der Formel

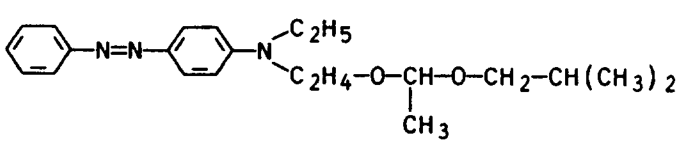

.

Geeignete aromatische Kohlenwasserstoffe, die im erfindungsgemäßen Verfahren zur Anwendung gelangen können, sind z.B. Benzol, $C_1$-$C_6$-Mono-, Di- oder Trialkylbenzole, wie Toluol, Ethylbenzol oder o-, m- oder p-Xylol, Chlorbenzol, o-Dichlorbenzol, Dimethylnaphthalin oder deren Mischungen.

Die Verwendung von Toluol, o-, m- oder p-Xylol oder deren Mischungen ist bevorzugt.

Geeignete mehrbasige Carbonsäuren, die im erfindungsgemäßen Verfahren zur Anwendung kommen können, sind insbesondere zwei- oder dreibasige Carbonsäuren, wie Fumarsäure, Maleinsäure, Citronensäure, Oxalsäure oder Terephthalsäure.

Die Verwendung von zweibasigen Carbonsäuren, insbesondere von Maleinsäure, als Katalysator ist bevorzugt.

Das erfindungsgemäße Verfahren wird zweckmäßig so durchgeführt, daß man auf an sich bekanntem Wege durch Diazotierung des Amins II, z.B. mit Alkalinitrit, wie Natrium- oder Kaliumnitrit, und Mineralsäure,

z.B. Salzsäure oder Schwefelsäure, in wäßrigem Milieu ein Diazoniumsalz erzeugt und die dabei resultierende Suspension bei einer Temperatur von -10 bis +10 °C, vorzugsweise -5 bis +8 °C, mit einer Lösung der Kupplungskomponente III in einem aromatischen Kohlenwasserstoff versetzt. Diese Lösung enthält dabei im allgemeinen 30 bis 60 Gew.-%, vorzugsweise 40 bis 50 Gew.-%, an Kupplungskomponente III, jeweils bezogen auf das Gewicht der Lösung.

Das zweiphasige Reaktionsgemisch wird auf einen pH-Wert von 3 bis 5 abgepuffert, was beispielsweise durch Zugabe von wäßriger Natriumacetatlösung geschehen kann, und 3 bis 5 Stunden bei einer Temperatur von 15 bis 25 °C gerührt.

Daran anschließend wird das Reaktionsgemisch auf eine Temperatur von 75 bis 95 °C erhitzt und die wäßrige Phase von der organischen Phase, die den Farbstoff der Formel IV enthält, abgetrennt.

Zur vollständigen Entwässerung kann die organische Phase einer azeotropen Destillation unterworfen werden. Die so entwässerte organische Phase kann dann direkt für den Acetalisierungsschritt verwendet werden.

In manchen Fällen ist es auch von Vorteil, den bei der zweiphasigen Kupplungsreaktion verwendeten aromatischen Kohlenwasserstoff vollständig oder teilweise zu entfernen und gegen einen anderen aromatischen Kohlenwasserstoff auszutauschen. Dies ist insbesondere dann von Bedeutung, wenn der im erfindungsgemäßen Verfahren als Reaktionsprodukt anfallende Farbstoff I direkt in Lösung seinem Anwendungsgebiet, nämlich der Markierung von Mineralölen zugeführt werden soll. Um gewisse vorgeschriebene Spezifikationen einhalten zu können, kommen hierbei in der Regel nämlich nur spezifische Lösungsmittel, z.B. Xylol oder ein hochsiedendes Aromatengemisch (Shellsol® AB der Firma Shell) zur Anwendung.

Zu der Lösung des Farbstoffs IV im aromatischen Kohlenwasserstoff, die in der Regel eine Temperatur von 75 bis 100 °C aufweist, wird dann die mehrbasige Carbonsäure als Katalysator gegeben. Daran anschließend erfolgt die Zugabe des Vinylethers V bei einer Temperatur von 75 bis 125 °C. Nach einer Rührphase von 3 bis 10 Stunden, die bei einer Temperatur von 75 bis 125 °C erfolgt, ist die Acetalisierung beendet und überschüssiger Vinylether wird gegebenenfalls abdestilliert. Die als Katalysator verwendete mehrbasige Carbonsäure kann z.B. durch Filtration aus dem Reaktionsgemisch entfernt und nach Bedarf in das Verfahren rückgeführt werden.

Die resultierende Lösung des Farbstoffs I ist direkt gebrauchsfertig.

Zur Herstellung des Farbstoffs IV werden in der Regel das aus dem Amin II resultierende Diazoniumsalz und die Kupplungskomponente III im Molverhältnis von 1 : 0,95 bis 1 : 1,05 umgesetzt.

Die zur Acetalisierung verwendete Menge an Vinylether V beträgt im allgemeinen 1,4 bis 1,7 Mol, bezogen auf 1 Mol an Amin II.

Die Menge an Katalysator beträgt in der Regel 0,8 bis 5, vorzugsweise 1 bis 3,5 Gew.-%, jeweils bezogen auf das Gewicht von Amin II.

Mittels des neuen Verfahrens werden die acetalisierten Azofarbstoffe der Formel I auf einfache Weise und in hoher Ausbeute und Reinheit erhalten. Im erfindungsgemäßen Verfahren kann auf eine Zwischenisolierung des nicht-acetalisierten Azofarbstoffs verzichtet werden. Außerdem fallen die Zielprodukte in anwendungstechnisch einwandfreier Form an, so daß das Reaktionsgemisch direkt weiterverwendet werden kann.

Bei den acetalisierten Azofarbstoffen der Formel I handelt es sich um wertvolle Markiersubstanzen für Mineralöl (s. z.B. EP-A-256 460), die zusammen mit öllöslichen Farbstoffen angewendet werden können.

Die folgenden Beispiele sollen die Erfindung näher erläutern.

Beispiel 1

Zu einer Mischung von 165 ml Wasser und 167 g Schwefelsäure (75 gew.-%ig) wurden innerhalb von 30 Minuten 93 g (1 mol) Anilin getropft, dabei wurde der Temperaturanstieg mittels Außenkühlung auf 50 °C begrenzt. Nach Abkühlung der Suspension des entstandenen Anilin-sulfats auf 0 bis 5 °C fügte man 430 g Eis hinzu. Anschließend diazotierte man innerhalb von 30 Minuten bei einer Temperatur von 0 bis 8 °C mit 230 ml 30 gew.-%iger Natriumnitritlösung. Nach einstündigem Rühren bei 0 bis 5 °C wurde der Nitritüberschuß mit Amidosulfonsäure zerstört. Nach Zugabe von 7,5 g eines Tensids auf Basis von oxethyliertem Oleylamin tropfte man während 60 Minuten unter intensivem Rühren eine Lösung von 161 g (0,975 mol) N-Ethyl-N-(2-hydroxyethyl)anilin in 150 ml Toluol zu, dabei erhöhte sich der pH-Wert des Gemisches auf ca. 3. Anschließend wurde der pH-Wert mit Natriumacetatlösung bei einer Temperatur von maximal 15 °C auf 4,0 angehoben. Im Verlauf von 2 Stunden waren dafür 556 g Natriumacetatlösung (30 gew.-%ig) erforderlich. Nach weiteren 4 Stunden war die Kupplungsreaktion beendet. Die resultierende Suspension wurde nun auf 90 °C erhitzt, wobei sich der entstandene Farbstoff im organischen Medium löste. Dann wurde der Rührvorgang unterbrochen. Nach ca. 15 Minuten Verweilzeit trennte man die untere, wäßrige Phase vollständig ab. Die zurückbleibende organische Lösung wurde mit 150 ml Toluol verdünnt und durch

azeotrope Destillation entwässert.

Zur verbleibenden organischen Phase fügte man 1,25 g Maleinsäure zu und tropfte danach innerhalb von 35 Minuten 154 g (1,54 mol) Vinylisobutylether zu. Nach erfolgter Zugabe wurde auf 100 bis 105 °C erhitzt und 5 Stunden bei dieser Temperatur nachgerührt.

Danach kühlte man das Reaktionsgemisch auf ca. 80 °C ab und destillierte den überschüssigen Vinylisobutylether unter vermindertem Druck bei unveränderter Kolbentemperatur ab.

Die zurückbleibende Farbstofflösung wurde danach bei einer Temperatur von 50 bis 60 °C unter vermindertem Druck über eine Glasfilternutsche (Nr. 3) filtriert, um die als Katalysator verwendete Maleinsäure abzutrennen.

Ausbeute: 468 g Farbstofflösung mit einem Gehalt an Farbstoff von 369 g.

In analoger Weise werden die in der folgenden Tabelle aufgeführten Farbstoffe der Formel

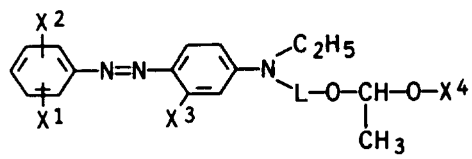

erhalten.

| Bsp. Nr. | $X^1$ | $X^2$ | $X^3$ | L | $X^4$ |
|---|---|---|---|---|---|
| 2 | 2-$CH_3$ | H | H | $C_2H_4$ | $CH_2-CH(CH_3)_2$ |
| 3 | 3-$CH_3$ | H | H | $C_2H_4$ | $CH_2-CH(CH_3)_2$ |
| 4 | 4-$CH_3$ | H | H | $C_2H_4$ | $CH_2-CH(CH_3)_2$ |
| 5 | 2-$CH_3$ | H | H | $C_2H_4$ | $CH_2-CH(C_2H_5)(C_4H_9)$ |
| 6 | 2-$CH_3$ | H | H | $C_2H_4$ | $C_6H_{11}$ |
| 7 | 2-$CH_3$ | H | H | $C_2H_4$ | iso-$C_9H_{19}$ |
| 8 | 2-$CH_3$ | H | $CH_3$ | $C_2H_4$ | $CH_2-CH(CH_3)_2$ |
| 9 | 3-$CH_3$ | H | H | $C_3H_6$ | $CH_2-CH(CH_3)_2$ |
| 10 | 2-$OCH_3$ | H | H | $C_2H_4$ | $CH_2-CH(CH_3)_2$ |
| 11 | 3-$OCH_3$ | H | H | $C_3H_6$ | $CH_2-CH(CH_3)_2$ |
| 12 | 4-$OCH_3$ | H | $CH_3$ | $C_2H_4$ | $CH_2-CH(C_2H_5)(C_4H_9)$ |
| 13 | 4-$OCH_3$ | H | H | $C_2H_4$ | $CH_2-CH(CH_3)_2$ |
| 14 | 2-$OCH_3$ | H | H | $C_2H_4$ | iso-$C_9H_{19}$ |
| 15 | 2-$OCH_3$ | H | $CH_3$ | $C_3H_6$ | $C_6H_{11}$ |
| 16 | 3-$OCH_3$ | H | $CH_3$ | $C_2H_4$ | $CH_2-CH(CH_3)_2$ |
| 17 | 4-$OCH_3$ | H | H | $C_3H_6$ | $CH_2-CH(CH_3)_2$ |
| 18 | 2-$NO_2$ | 4-$NO_2$ | H | $C_2H_4$ | $CH_3-CH(CH_3)_2$ |

## Patentansprüche

**1.** Verfahren zur Herstellung von Farbstoffen der Formel I

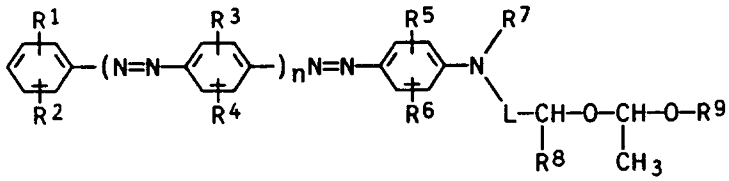
(I),

in der

n null oder 1,

$R^1$, $R^2$, $R^3$ und $R^5$ gleich oder verschieden sind und unabhängig voneinander jeweils Wasserstoff, $C_1$-$C_4$-Alkyl, $C_1$-$C_4$-Alkoxy, Halogen oder Nitro,

$R^4$ und $R^6$ gleich oder verschieden sind und unabhängig voneinander jeweils Wasserstoff, $C_1$-$C_4$-Alkyl, $C_1$-$C_4$-Alkoxy, Halogen, Nitro oder $C_1$-$C_4$-Alkanoylamino,

$R^7$ $C_1$-$C_4$-Alkyl,

$R^8$ Wasserstoff oder $C_1$-$C_4$-Alkyl

$R^9$ $C_1$-$C_{18}$-Alkyl oder Cyclohexyl und

L $C_1$-$C_3$-Alkylen bedeuten, durch Kupplungsreaktion des Diazoniumsalzes des Amins der Formel II

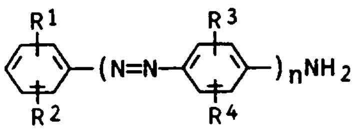
(II),

in der n, $R^1$, $R^2$, $R^3$ und $R^4$ jeweils die obengenannte Bedeutung besitzen, mit der Kupplungskomponente der Formel III

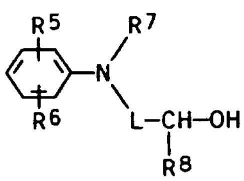
(III),

in der $R^5$, $R^6$, $R^7$, $R^8$ und L jeweils die obengenannte Bedeutung besitzen, und anschließender Umsetzung des resultierenden Farbstoffs der Formel IV

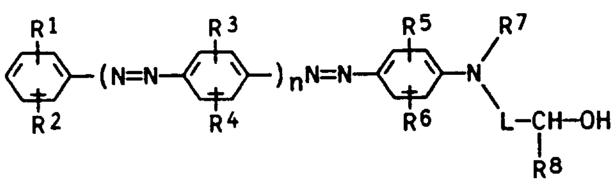
(IV),

in der n, $R^1$, $R^2$, $R^3$, $R^4$, $R^5$, $R^6$, $R^7$, $R^8$ und L jeweils die obengenannte Bedeutung besitzen, mit einem Vinylether der Formel V

$CH_2 = CH\text{-}OR^9$ (V),

in der $R^9$ die obengenannte Bedeutung besitzt, dadurch gekennzeichnet, daß man die Kupplungsreaktion in einem zweiphasigen Reaktionsgemisch, enthaltend Wasser und einen aromatischen Kohlenwasserstoff, durchführt, anschließend die wäßrige Phase abtrennt und den in der organischen Phase befindlichen Farbstoff der Formel IV ohne Zwischenisolierung mit einem Vinylether der Formel V in Gegenwart einer mehrbasigen Carbonsäure als Katalysator umsetzt.

**2.** Verfahren nach Anspruch 1, dadurch gekennzeichnet, daß man eine zweibasige Carbonsäure als Katalysator verwendet.

**3.** Verfahren nach Anspruch 1, dadurch gekennzeichnet, daß man Maleinsäure als Katalysator verwendet.

**4.** Verfahren nach Anspruch 1, dadurch gekennzeichnet, daß in Formel I n null bedeutet.

**Claims**

**1.** A process for preparing dyes of the formula I

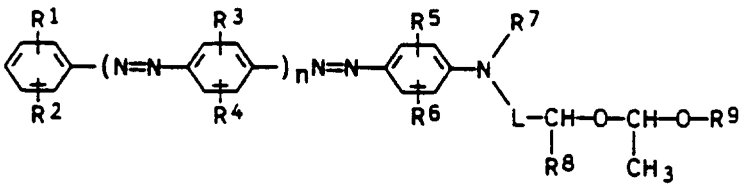

(I)

where

| | |
|---|---|
| n | is zero or 1, |
| $R^1$, $R^2$, $R^3$ and $R^5$ | are identical or different and each is independently of the others hydrogen, $C_1$-$C_4$-alkyl, $C_1$-$C_4$-alkoxy, halogen or nitro, |
| $R^4$ and $R^6$ | are identical or different and each is independently of the other hydrogen, $C_1$-$C_4$-alkyl, $C_1$-$C_4$-alkoxy, halogen, nitro or $C_1$-$C_4$-alkanoylamino, |
| $R^7$ | is $C_1$-$C_4$-alkyl, |
| $R^8$ | is hydrogen or $C_1$-$C_4$-alkyl, |
| $R^9$ | is $C_1$-$C_{18}$-alkyl or cyclohexyl, and |

L is $C_1$-$C_3$-alkylene, by coupling the diazonium salt of the amine of the formula II

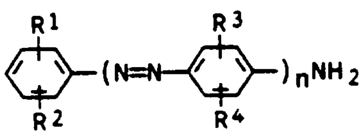

(II)

where n, $R^1$, $R^2$, $R^3$ and $R^4$ are each as defined above, with the coupling component of the formula III

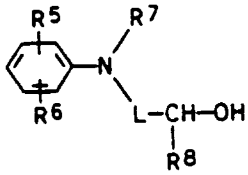

(III)

where $R^5$, $R^6$, $R^7$, $R^8$ and L are each as defined above, and subsequently reacting the resulting dye of the formula IV

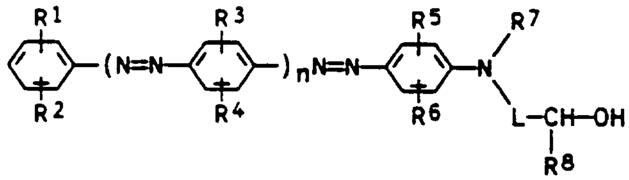

(IV)

where n, $R^1$, $R^2$, $R^3$, $R^4$, $R^5$, $R^6$, $R^7$, $R^8$ and L are each as defined above, with a vinyl ether of the formula V

$CH_2 = CH\text{-}OR^9$ (V)

where $R^9$ is as defined above, which comprises carrying out the coupling reaction in a two-phase reaction mixture comprising water and an aromatic hydrocarbon, subsequently separating off the aqueous phase and reacting the dye of the formula IV, which is present in the organic phase, without intermediate isolation, with a vinyl ether of the formula V in the presence of a polybasic carboxylic acid as catalyst.

**2.** A process as claimed in claim 1, wherein a dibasic carboxylic acid is used as catalyst.

**3.** A process as claimed in claim 1, wherein maleic acid is used as catalyst.

**4.** A process as claimed in claim 1, wherein n in the formula I is zero.

**Revendications**

**1.** Procédé de préparation de colorants de la formule I :

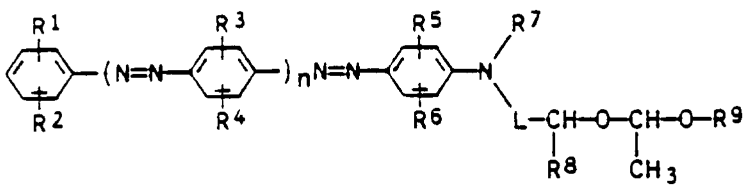

(I)

dans laquelle

n est égal à zéro ou à 1,

$R^1$, $R^2$, $R^3$ et $R^5$ sont identiques ou différents et désignent, chacun indépendamment des autres, un atome d'hydrogène, un radical alkyle en $C_1$-$C_4$, alcoxy en $C_1$-$C_4$, un atome d'halogène ou le radical nitro,

$R^4$ et $R^6$ sont identiques ou différents et désignent, chacun indépendamment de l'autre, un atome d'hydrogène, un radical alkyle en $C_1$-$C_4$, alcoxy en $C_1$-$C_4$, un atome d'halogène, le radical nitro, ou un radical alcanoylamino en $C_1$-$C_4$,

$R^7$ représente un radical alkyle en $C_1$-$C_4$,

$R^8$ représente un atome d'hydrogène ou un radical alkyle en $C_1$-$C_4$,

$R^9$ représente un radical alkyle en $C_1$-$C_{18}$ ou le radical cyclohexyle, et

L représente un radical alkylène en $C_1$-$C_3$, par une réaction à copulation du sel de diazonium de l'amine de la formule II :

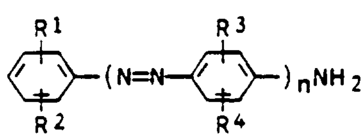

(II)

dans laquelle n, $R^1$, $R^2$, $R^3$ et $R^4$ possèdent les significations qui leur ont été attribuées ci-dessus, avec le copulant de la formule III :

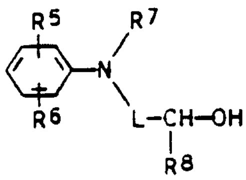

(III)

dans laquelle $R^5$, $R^6$, $R^7$, $R^8$ et L possèdent les significations qui leur ont été attribuées ci-dessus et réaction subséquente du colorant obtenu de la formule IV :

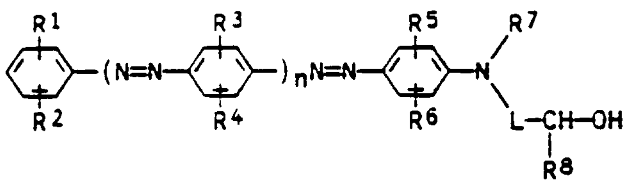

(IV)

dans laquelle n, $R^1$, $R^2$, $R^3$, $R^4$, $R^5$, $R^6$, $R^7$, $R^8$ et L possèdent les significations qui leur ont été attribuées ci-dessus, avec un éther vinylique de la formule V :

$CH_2 = CH\text{-}OR^9$ (V)

dans laquelle $R^9$ possède les significations qui lui ont été attribuées ci-dessus, caractérisé en ce que l'on entreprend la réaction de copulation dans un mélange réactionnel à deux phases, contenant de l'eau et un hydrocarbure aromatique, puis on sépare la phase aqueuse et on fait réagir le colorant de la formule IV qui se trouve dans la phase organique sans isolement intermédiaire avec un éther vinylique de la formule V en présence d'un acide carboxylique polybasique servant de catalyseur.

**2.** Procédé suivant la revendication 1, caractérisé en ce que l'on utilise un acide carboxylique dibasique à titre de catalyseur.

**3.** Procédé suivant la revendication 1, caractérisé en ce que l'on utilise l'acide maléique à titre de catalyseur.

**4.** Procédé suivant la revendication 1, caractérisé en ce que n est égal à zéro dans la formule I.